# EUROPEAN PATENT APPLICATION

(11) **EP 4 679 540 A1**
(43) Date of publication of application: **14.01.2026**
(21) Application number: 25187662.9
(22) Date of filing: 04.07.2025
(51) Int. Cl.: H01M 4/70, H01M 10/04, H01M 10/0587

(54) **BATTERY CELL AND ELECTRICAL DEVICE**

(30) Priority: 05.07.2024 CN 202410902792
(71) Applicant: XIAMEN AMPACE TECHNOLOGY LIMITED, Xiamen City, Fujian Province 361000 (CN)
(72) Inventor: JIANG, Jing, Xiamen City, Fujian Province, China, 361000 (CN)
(74) Representative: Icosa

(57) **Abstract**

A battery cell includes an electrode assembly. Along a width direction of a positive electrode plate that is unwound, a first edge of a negative active material layer of a negative electrode plate and a second edge of a positive active material layer of the positive electrode plate are located on the same side of the electrode assembly. A distance between the first edge of one layer of the negative active material layer closest to a winding start end of the positive electrode plate, and the second edge of one layer of the positive active material layer closest to the winding start end of the positive electrode plate, is S₁, and a distance between the first edge of one layer of the negative active material layer closest to a winding terminating end of the positive electrode plate, and the second edge of one layer of the positive active material layer closest to the winding terminating end of the positive electrode plate, is S₀, S₁ < S₀.

## Description

### TECHNICAL FIELD

This application relates to the technical field of batteries, and in particular, to a battery cell and an electrical device.

### BACKGROUND

With the rapid development of electronic information technology, various electronic devices are evolving toward intelligence and versatility, thereby placing increasingly higher requirements on the safety of batteries. Therefore, how to improve the safety of a battery has become a pressing challenge in the field of batteries.

### SUMMARY

This application provides a battery cell and an electrical device to improve safety of the battery cell.

According to a first aspect, this application provides a battery cell. The battery cell includes an electrode assembly. The electrode assembly is formed by winding a positive electrode plate, a separator, and a negative electrode plate that are stacked up. The negative electrode plate includes a negative current collector and a negative active material layer disposed on a surface of the negative current collector. Along a width direction of the positive electrode plate that is unwound, the negative active material layer includes a first edge. The positive electrode plate includes a positive current collector and a positive active material layer disposed on a surface of the positive current collector. Along a width direction of the positive electrode plate that is unwound, a width of the negative active material layer is greater than a width of the positive active material layer. The positive active material layer includes a second edge. The first edge and the second edge are located on the same side of the electrode assembly. Along the width direction of the positive electrode plate that is unwound, a distance between the first edge of one layer of the negative active material layer closest to a winding start end of the positive electrode plate, and the second edge of one layer of the positive active material layer closest to the winding start end of the positive electrode plate, is S₁, and a distance between the first edge of one layer of the negative active material layer closest to a winding terminating end of the positive electrode plate, and the second edge of one layer of the positive active material layer closest to the winding terminating end of the positive electrode plate, is S₀, satisfying: S₁ < S₀.

In the above technical solution, during the winding of the electrode assembly, the tolerance variation in the widths of the positive electrode plate and the negative electrode plate increases progressively from the winding start end of the positive electrode plate to the winding terminating end of the positive electrode plate. Therefore, the setting of S₁ < S₀ reduces the probability that the positive active material layer near the winding terminating end of the positive electrode plate extends beyond the negative active material layer. In this way, the metal ions of the positive active material layer can be intercalated into the negative active material layer, thereby reducing the probability of precipitation of the metal ions, and improving the safety of the battery cell. In addition, the corresponding part of the electrode assembly at which the negative active material layer extends beyond the positive active material layer forms an accommodation space. The accommodation space is available for accommodating an electrolyte solution, thereby increasing the accommodation space for an electrolyte solution, improving the infiltration effect of the electrolyte solution, and prolonging the service life of the battery cell.

In some embodiments of this application, a distance between the first edge of the negative active material layer and the second edge of the positive active material layer gradually increases from the winding start end of the positive electrode plate to the winding terminating end of the positive electrode plate.

In the above technical solution, the distance between the first edge of the negative active material layer and the second edge of the positive active material layer is set to gradually increase from the winding start end of the positive electrode plate to the winding terminating end of the positive electrode plate, thereby further reducing the probability that the positive active material layer extends beyond the negative active material layer. In this way, the metal ions of the positive active material layer can be intercalated into the negative active material layer, thereby further reducing the probability of precipitation of the metal ions, and further improving the safety of the battery cell. In addition, the corresponding part of the electrode assembly at which the negative active material layer extends beyond the positive active material layer forms an accommodation space. The accommodation space is available for accommodating the electrolyte solution, thereby further increasing the accommodation space for an electrolyte solution, further improving the infiltration effect of the electrolyte solution, and further prolonging the service life of the battery cell.

In some embodiments of this application, from the winding start end of the positive electrode plate to the winding terminating end of the positive electrode plate, along the width direction of the positive electrode plate that is unwound, the width of the negative active material layer gradually increases, and the width of the positive active material layer remains unchanged.

In the above technical solution, by making the width of the negative active material layer gradually increase and making the width of the positive active material layer remain unchanged from the winding start end of the positive electrode plate to the winding terminating end of the positive electrode plate along the width direction of the positive electrode plate that is unwound, this application causes the distance between the first edge of the negative active material layer and the second edge of the positive active material layer to gradually increase from the winding start end of the positive electrode plate to the winding terminating end of the positive electrode plate, thereby reducing the probability that the positive active material layer extends beyond the negative active material layer. In this way, the metal ions of the positive active material layer can be intercalated into the negative active material layer, thereby reducing the probability of precipitation of the metal ions, and improving the safety of the battery cell. In addition, the corresponding part of the electrode assembly at which the negative active material layer extends beyond the positive active material layer forms an accommodation space. The accommodation space is available for accommodating the electrolyte solution, thereby increasing the accommodation space for an electrolyte solution, improving the infiltration effect of the electrolyte solution, and prolonging the service life of the battery cell.

In some embodiments of this application, the negative current collector includes a negative electrode main portion and a negative tab. The negative active material layer is disposed on the negative electrode main portion. A part of the negative tab is disposed on the negative electrode main portion, or, along the width direction of the positive electrode plate that is unwound, the negative tab is connected to a third edge of the negative electrode main portion. From the winding start end of the positive electrode plate to the winding terminating end of the positive electrode plate, a width of the negative electrode main portion gradually increases.

In the above technical solution, the negative active material layer is disposed on the negative electrode main portion. Therefore, the width of the negative electrode main portion is set to gradually increase from the winding start end of the positive electrode plate to the winding terminating end of the positive electrode plate. In this way, from the winding start end of the positive electrode plate to the winding terminating end of the positive electrode plate, along the width direction of the positive electrode plate that is unwound, the width of the negative active material layer gradually increases.

In some embodiments of this application, the positive current collector includes a positive electrode main portion and a positive tab. The positive active material layer is disposed on the positive electrode main portion. A part of the positive tab is disposed on the positive electrode main portion, or, along the width direction of the positive electrode plate that is unwound, the positive tab is connected to a fourth edge of the positive electrode main portion. The positive electrode plate further includes an insulation coating. The insulation coating includes a first part and a second part. The first part is disposed on the positive electrode main portion. The second part is disposed on the positive tab. From the winding start end of the positive electrode plate to the winding terminating end of the positive electrode plate, along the width direction of the positive electrode plate that is unwound, a width of an overlap part between the first part and the negative electrode main portion gradually increases.

In the above technical solution, the positive electrode plate is set to further include an insulation coating, and the insulation coating includes a first part and a second part. The first part is disposed on the positive electrode main portion, and the second part is disposed on the positive tab. In this way, the first part can implement insulation between the positive electrode main portion and the negative tab and the negative electrode main portion, and the second part can implement insulation between the positive tab and the negative tab, thereby improving the effect of insulation between the positive electrode plate and the negative electrode plate, and improving the safety of the battery cell. The width of the negative electrode main portion gradually increases from the winding start end of the positive electrode plate to the winding terminating end of the positive electrode plate, and therefore, by setting the width of the overlap part between the first part and the negative electrode main portion to gradually increase from the winding start end of the positive electrode plate to the winding terminating end of the positive electrode plate along the width direction of the positive electrode plate that is unwound, this application improves the insulation effect of the first part for the insulation between the positive electrode main portion and the negative electrode main portion, reduces the probability of contact shorting between the positive electrode plate and the negative electrode plate, and further improves the safety of the battery cell.

In some embodiments of this application, a width of the first part remains unchanged from the winding start end of the positive electrode plate to the winding terminating end of the positive electrode plate.

In the above technical solution, by setting the width of the first part to remain unchanged from the winding start end of the positive electrode plate to the winding terminating end of the positive electrode plate, this application facilitates preparation of an insulation coating, enables the insulation coating to exert a good insulation effect between the positive electrode plate and the negative electrode plate, and improves the safety of the battery cell.

In some embodiments of this application, a width by which the separator extends beyond the negative electrode main portion gradually decreases from the winding start end of the positive electrode plate to the winding terminating end of the positive electrode plate.

In the above technical solution, the width by which the separator extends beyond the negative electrode main portion is set to gradually decrease from the winding start end of the positive electrode plate to the winding terminating end of the positive electrode plate, thereby enabling the separator to exert a good isolation effect between the positive electrode plate and the negative electrode plate, and making the separator occupy a smaller space. More accommodation space can be reserved for accommodating the electrolyte solution, thereby increasing the accommodation space for an electrolyte solution, improving the infiltration effect of the electrolyte solution, and prolonging the service life of the battery cell.

In some embodiments of this application, from the winding start end of the positive electrode plate to the winding terminating end of the positive electrode plate, along the width direction of the positive electrode plate that is unwound, the width of the negative active material layer remains unchanged, and the width of the positive active material layer gradually decreases.

In the above technical solution, by making the width of the negative active material layer remain unchanged and making the width of the positive active material layer gradually decrease from the winding start end of the positive electrode plate to the winding terminating end of the positive electrode plate along the width direction of the positive electrode plate that is unwound, this application causes the distance between the first edge of the negative active material layer and the second edge of the positive active material layer to gradually increase from the winding start end of the positive electrode plate to the winding terminating end of the positive electrode plate, thereby reducing the probability that the positive active material layer extends beyond the negative active material layer. In this way, the metal ions of the positive active material layer can be intercalated into the negative active material layer, thereby reducing the probability of precipitation of the metal ions, and improving the safety of the battery cell. In addition, the corresponding part of the electrode assembly at which the negative active material layer extends beyond the positive active material layer forms an accommodation space. The accommodation space is available for accommodating the electrolyte solution, thereby increasing the accommodation space for an electrolyte solution, improving the infiltration effect of the electrolyte solution, and prolonging the service life of the battery cell.

In some embodiments of this application, from the winding start end of the positive electrode plate to the winding terminating end of the positive electrode plate, along the width direction of the positive electrode plate that is unwound, the width of the negative active material layer gradually increases, and the width of the positive active material layer gradually decreases.

In the above technical solution, by making the width of the negative active material layer gradually increase and making the width of the positive active material layer gradually decrease from the winding start end of the positive electrode plate to the winding terminating end of the positive electrode plate along the width direction of the positive electrode plate that is unwound, this application causes the distance between the first edge of the negative active material layer and the second edge of the positive active material layer to gradually increase from the winding start end of the positive electrode plate to the winding terminating end of the positive electrode plate, thereby reducing the probability that the positive active material layer extends beyond the negative active material layer. In this way, the metal ions of the positive active material layer can be intercalated into the negative active material layer, thereby reducing the probability of precipitation of the metal ions, and improving the safety of the battery cell. In addition, the corresponding part of the electrode assembly at which the negative active material layer extends beyond the positive active material layer forms an accommodation space. The accommodation space is available for accommodating the electrolyte solution, thereby increasing the accommodation space for an electrolyte solution, improving the infiltration effect of the electrolyte solution, and prolonging the service life of the battery cell.

In some embodiments of this application, 0 < S₀ - S₁ ≤ 5 mm.

In the above technical solution, the setting of S₀-S₁ > 0 reduces the probability that the positive active material layer near the winding terminating end of the positive electrode plate extends beyond the negative active material layer. In this way, the metal ions of the positive active material layer can be intercalated into the negative active material layer, thereby reducing the probability of precipitation of the metal ions, and improving the safety of the battery cell. In addition, the corresponding part of the electrode assembly at which the negative active material layer extends beyond the positive active material layer forms an accommodation space. The accommodation space is available for accommodating the electrolyte solution, thereby increasing the accommodation space for an electrolyte solution, improving the infiltration effect of the electrolyte solution, and prolonging the service life of the battery cell. The setting of S₀-S₁ ≤ 5 mm reduces the proportion of a non-overlap area between the negative active material layer and the positive active material layer along the thickness direction of the positive electrode plate, and increases a proportion of an overlap area between the negative active material layer and the positive active material layer. An effective area available on the negative active material layer for intercalation of metal ions accounts for a larger proportion, thereby increasing the energy density of the battery cell. Therefore, the setting of 0 < S₀ - S₁ ≤ 5 mm not only reduces the probability of precipitation of metal ions, improves the safety of the battery cell, improves the infiltration effect of the electrolyte solution, and prolongs the service life of the battery cell, but also increases the proportion of the effective area available on the negative active material layer for intercalation of metal ions, and increases the energy density of the battery cell.

In some embodiments of this application, 1.5 mm ≤ S₀ ≤ 5 mm, and 0.5 mm ≤ S₁ ≤ 2.5 mm.

In the above technical solution, the setting of S₀ ≥ 1.5 mm increases the distance by which the first edge of the n^{th} layer of the negative active material layer closest to the winding terminating end of the positive electrode plate extends beyond the second edge of the n^{th} layer of the positive active material layer closest to the winding terminating end of the positive electrode plate. After the electrode assembly is formed by winding, the probability that the positive active material layer near the winding terminating end of the positive electrode plate extends beyond the negative active material layer is relatively low. In this way, the metal ions of the positive active material layer can be intercalated into the negative active material layer, thereby reducing the probability of precipitation of the metal ions, and improving the safety of the battery cell. In addition, the corresponding part of the electrode assembly at which the n^{th} layer of the negative active material layer extends beyond the n^{th} layer of the positive active material layer forms a larger accommodation space, thereby increasing the accommodation space for an electrolyte solution, improving the infiltration effect of the electrolyte solution, and prolonging the service life of the battery cell. The setting of S₀ ≤ 5 mm reduces the proportion of the non-overlap area between the n^{th} layer of the negative active material layer and the n^{th} layer of the positive active material layer along the thickness direction of the positive electrode plate, and increases the proportion of the overlap area between the n^{th} layer of the negative active material layer and the n^{th} layer of the positive active material layer. The effective area available on the n^{th} layer of the negative active material layer for intercalation of metal ions accounts for a larger proportion, thereby increasing the energy density of the battery cell. Therefore, the setting of 1.5 mm ≤ S₀ ≤ 5 mm not only reduces the probability that the positive active material layer close to the winding terminating end of the positive electrode plate extends beyond the negative active material layer, reduces the probability of precipitation of metal ions, and improves the safety of the battery cell, but also increases the proportion of the effective area available on the n^{th} layer of the negative active material layer for intercalation of metal ions, and increases the energy density of the battery cell.

The setting of S₁ ≥ 0.5 mm increases the distance by which the first edge of the 1^{st} layer of the negative active material layer closest to the winding terminating end of the positive electrode plate extends beyond the second edge of the 1^{st} layer of the positive active material layer closest to the winding terminating end of the positive electrode plate. After the electrode assembly is formed by winding, the probability that the positive active material layer near the winding terminating end of the positive electrode plate extends beyond the negative active material layer is relatively low. In this way, the metal ions of the positive active material layer can be intercalated into the negative active material layer, thereby reducing the probability of precipitation of the metal ions, and improving the safety of the battery cell. In addition, the corresponding part of the electrode assembly at which the 1^{st} layer of the negative active material layer extends beyond the 1^{st} layer of the positive active material layer forms a larger accommodation space, thereby increasing the accommodation space for an electrolyte solution, improving the infiltration effect of the electrolyte solution, and prolonging the service life of the battery cell. The setting of S₁ ≤ 2.5 mm reduces the proportion of the non-overlap area between the 1^{th} layer of the negative active material layer and the 1^{st} layer of the positive active material layer along the thickness direction of the positive electrode plate, and increases the proportion of the overlap area between the 1^{st} layer of the negative active material layer and the 1^{st} layer of the positive active material layer. The effective area available on the 1^{st} layer of the negative active material layer for intercalation of metal ions accounts for a larger proportion, thereby increasing the energy density of the battery cell. Therefore, the setting of 0.5 mm ≤ S₁ ≤ 2.5 mm not only reduces the probability that the positive active material layer close to the winding terminating end of the positive electrode plate extends beyond the negative active material layer, reduces the probability of precipitation of metal ions, and improves the safety of the battery cell, but also increases the proportion of the effective area available on the n^{th} layer of the negative active material layer for intercalation of metal ions, and increases the energy density of the battery cell.

In some embodiments of this application, from the winding start end of the positive electrode plate to the winding terminating end of the positive electrode plate, a distance between the first edge of an (n-1)^{th} layer of the negative active material layer and the second edge of an (n-1)^{th} layer of the positive active material layer is Sₙ₋₁, and a distance between the first edge of an n^{th} layer of the negative active material layer and the second edge of an n^{th} layer of the positive active material layer is Sₙ, satisfying: 0 < Sₙ - Sₙ₋₁ ≤ 1 mm, where n is an integer greater than or equal to 3.

In the above technical solution, the setting of Sₙ-Sₙ₋₁ > 0 reduces the probability that the positive active material layer extends beyond the negative active material layer. In this way, the metal ions of the positive active material layer can be intercalated into the negative active material layer, thereby reducing the probability of precipitation of the metal ions, and improving the safety of the battery cell. In addition, the corresponding part of the electrode assembly at which the negative active material layer extends beyond the positive active material layer forms an accommodation space. The accommodation space is available for accommodating the electrolyte solution, thereby increasing the accommodation space for an electrolyte solution, improving the infiltration effect of the electrolyte solution, and prolonging the service life of the battery cell. The setting of Sₙ-Sₙ₋₁ ≤ 1 mm reduces the proportion of a non-overlap area between the negative active material layer and the positive active material layer along the thickness direction of the positive electrode plate, and increases a proportion of an overlap area between the negative active material layer and the positive active material layer. An effective area available on the negative active material layer for intercalation of metal ions accounts for a larger proportion, thereby increasing the energy density of the battery cell. Therefore, the setting of 0 < Sₙ-Sₙ₋₁ ≤ 1 mm not only reduces the probability of precipitation of metal ions, improves the safety of the battery cell, improves the infiltration effect of the electrolyte solution, and prolongs the service life of the battery cell, but also increases the proportion of the effective area available on the negative active material layer for intercalation of metal ions, and increases the energy density of the battery cell.

In some embodiments of this application, from the winding start end of the positive electrode plate to the winding terminating end of the positive electrode plate, a distance between the first edge of an (n-2)^{th} layer of the negative active material layer and the second edge of an (n-2)^{th} layer of the positive active material layer is Sₙ₋₂, satisfying: Sₙ - Sₙ₋₁ = Sₙ₋₁ - Sₙ₋₂.

In the above technical solution, the setting of Sₙ - Sₙ₋₁ = Sₙ₋₁ - Sₙ₋₂ makes the distance between the first edge of the negative active material layer and the second edge of the positive active material layer vary evenly. When the setting is applied to a winding process of the electrode assembly, the tolerance variation in the widths of the positive electrode plate and the negative electrode plate gradually increases from the winding start end of the positive electrode plate to the winding terminating end of the positive electrode plate, thereby reducing the probability that the positive active material layer extends beyond the negative active material layer. In this way, the metal ions of the positive active material layer can be intercalated into the negative active material layer, thereby reducing the probability of precipitation of the metal ions, and improving the safety of the battery cell.

According to a second aspect, this application provides an electrical device. The electrical device includes the battery cell disclosed above. The battery cell is configured to provide electrical energy.

### BRIEF DESCRIPTION OF DRAWINGS

To describe technical solutions in some embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of an electrode assembly of a battery cell according to some embodiments of this application;
FIG. 2 is a schematic structural diagram of an unwound electrode assembly of a battery cell according to some embodiments of this application;
FIG. 3 is a schematic structural diagram of an unwound electrode assembly of a battery cell according to other embodiments of this application;
FIG. 4 is a schematic structural diagram of an unwound negative current collector of a battery cell according to other embodiments of this application;
FIG. 5 is a schematic structural diagram of an unwound positive current collector of a battery cell according to other embodiments of this application;
FIG. 6 is a schematic structural diagram of an unwound negative electrode plate of a battery cell according to other embodiments of this application;
FIG. 7 is a schematic structural diagram of an unwound electrode assembly of a battery cell according to other embodiments of this application;
FIG. 8 is a schematic structural diagram of an unwound electrode assembly of a battery cell according to other embodiments of this application;
FIG. 9 is a schematic structural diagram of an unwound electrode assembly of a battery cell according to other embodiments of this application; and
FIG. 10 is a schematic structural diagram of an unwound electrode assembly of a battery cell according to other embodiments of this application.

List of reference signs: 10-electrode assembly; 100-positive electrode plate; 110-positive current collector; 111-positive electrode main portion; 111a-fourth edge; 112-positive tab; 120-positive active material layer; 120a-second edge; 130-insulation coating; 131-first part; 132-second part; 200-separator; 300-negative electrode plate; 310-negative current collector; 311-negative electrode main portion; 311a-third edge; 312-negative tab; 320-negative active material layer; 320a-first edge; X-width direction of an unwound positive electrode plate

### DETAILED DESCRIPTION

To make the objectives, technical solutions, and advantages of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion.

The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

With the development of the new energy industry, batteries gradually evolve toward a high energy density and a high power density. This makes batteries more prone to safety hazards such as short circuits. For a jelly-roll battery, during the winding of an electrode assembly, a part close to a winding terminating end of an electrode plate is not bound by tension, resulting in a progressively increasing tolerance variation in the widths of a positive electrode plate and a negative electrode plate from a winding start end of the electrode plate to the winding terminating end of the electrode plate. The positive electrode plate and the negative electrode plate near the winding terminating end of the electrode plate are more prone to contact shorting, thereby affecting the safety of the battery. In addition, if the positive electrode plate extends beyond the negative electrode plate, metal ions deintercalated from the positive electrode plate are unable to be intercalated into the negative electrode plate, thereby being prone to cause precipitation of the metal ions and affect the service life of the battery.

To improve the safety of an electrochemical device, this application provides a battery cell. The battery cell includes an electrode assembly. The electrode assembly is formed by winding a separator, a positive electrode plate, a separator, and a negative electrode plate that are stacked up, or is formed by winding a positive electrode plate, a separator, a negative electrode plate, and a separator that are stacked up. The negative electrode plate includes a negative current collector and a negative active material layer disposed on a surface of the negative current collector. Along a width direction of the positive electrode plate that is unwound, the negative active material layer includes a first edge. The positive electrode plate includes a positive current collector and a positive active material layer disposed on a surface of the positive current collector. Along a width direction of the positive electrode plate that is unwound, a width of the negative active material layer is greater than a width of the positive active material layer. The positive active material layer includes a second edge. The first edge and the second edge are located on the same side of the electrode assembly. Along the width direction of the positive electrode plate that is unwound, a distance between the first edge of one layer of the negative active material layer closest to a winding start end of the positive electrode plate, and the second edge of one layer of the positive active material layer closest to the winding start end of the positive electrode plate, is S₁, and a distance between the first edge of one layer of the negative active material layer closest to a winding terminating end of the positive electrode plate, and the second edge of one layer of the positive active material layer closest to the winding terminating end of the positive electrode plate, is S₀, satisfying: S₁ < S₀.

In a battery cell of the above structure, during the winding of the electrode assembly, the tolerance variation in the widths of the positive electrode plate and the negative electrode plate increases progressively from the winding start end of the positive electrode plate to the winding terminating end of the positive electrode plate. Therefore, along the width direction of the positive electrode plate that is unwound, the distance between the first edge of one layer of the negative active material layer closest to the winding start end of the positive electrode plate, and the second edge of one layer of the positive active material layer closest to the winding start end of the positive electrode plate, is defined as S₁, and the distance between the first edge of one layer of the negative active material layer closest to the winding terminating end of the positive electrode plate, and the second edge of one layer of the positive active material layer closest to the winding terminating end of the positive electrode plate, is defined as S₀. The distances are controlled to satisfy: S₁ < S₀, thereby reducing the probability that the positive active material layer near the winding terminating end of the positive electrode plate extends beyond the negative active material layer. In this way, the metal ions of the positive active material layer can be intercalated into the negative active material layer, thereby reducing the probability of precipitation of the metal ions, and improving the safety of the battery cell. In addition, the corresponding part of the electrode assembly at which the negative active material layer extends beyond the positive active material layer forms an accommodation space. The accommodation space is available for accommodating an electrolyte solution, thereby increasing the accommodation space for an electrolyte solution, improving the infiltration effect of the electrolyte solution, and prolonging the service life of the battery cell.

The battery cell provided in an embodiment of this application may be a secondary battery or a primary battery. For example, the battery cell may be a lithium-ion battery, a sodium-ion battery, a magnesium-ion battery, or the like. The type of the battery cell is not limited herein. The electrochemical device may be in various shapes such as cylindrical, flat, cuboidal or other shapes. The shape is not limited herein.

An embodiment of this application provides an electrical device that uses a battery cell as a power supply. The electrical device may be, but is not limited to, a mobile phone, a tablet, a laptop computer, an electrical toy, electrical tool, an electric power cart, an electric vehicle, a ship, a spacecraft, or the like.

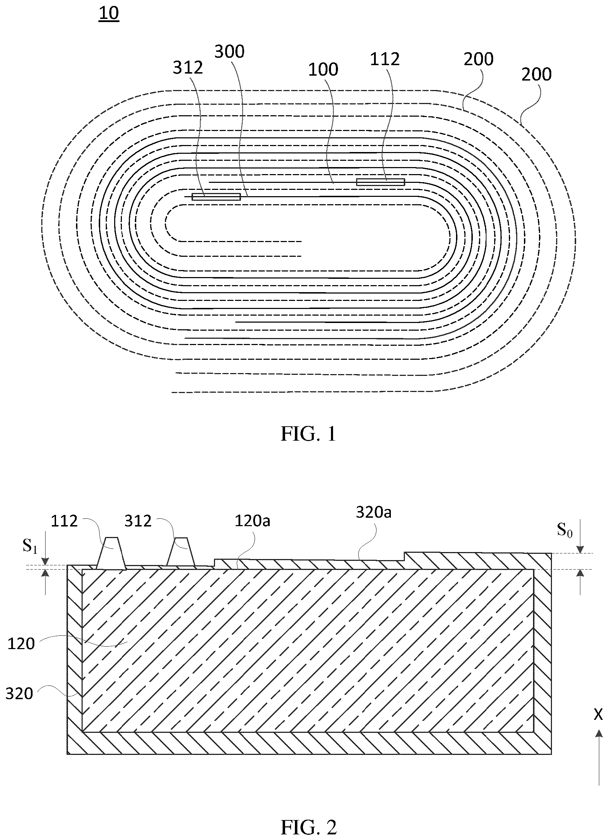

Referring to FIG. 1 and FIG. 2, FIG. 1 is a schematic structural diagram of an electrode assembly of a battery cell according to some embodiments of this application; and FIG. 2 is a schematic structural diagram of an unwound electrode assembly of a battery cell according to some embodiments of this application.

An embodiment of this application provides a battery cell. The battery cell includes an electrode assembly 10. The electrode assembly 10 is formed by winding a positive electrode plate 100, a separator 200, and a negative electrode plate 300 that are stacked up. The negative electrode plate 300 includes a negative current collector 310 and a negative active material layer 320 disposed on a surface of the negative current collector 310. Along a width direction X of the positive electrode plate that is unwound, the negative active material layer 320 includes a first edge 320a. The positive electrode plate 100 includes a positive current collector 110 and a positive active material layer 120 disposed on a surface of the positive current collector 110. Along the width direction X of the positive electrode plate that is unwound, a width of the negative active material layer 320 is greater than a width of the positive active material layer 120. The positive active material layer 120 includes a second edge 120a. The first edge 320a and the second edge 120a are located on the same side of the electrode assembly 10.

In some embodiments, along the width direction X of the positive electrode plate that is unwound, a distance between the first edge 320a of one layer of the negative active material layer 320, closest to a winding start end of the positive electrode plate 100, and the second edge 120a of one layer of the positive active material layer 120, closest to the winding start end of the positive electrode plate 100, is S₁, and a distance between the first edge 320a of one layer of the negative active material layer 320, closest to a winding terminating end of the positive electrode plate 100, and the second edge 120a of one layer of the positive active material layer 120, closest to the winding terminating end of the positive electrode plate 100, is S₀, satisfying: S₁ < S₀. For example, S₁ may be 0.9S₀, 0.7S₀, 0.5S₀, or the like.

During the winding of the electrode assembly 10, the tolerance variation in the widths of the positive electrode plate and the negative electrode plate increases progressively from the winding start end of the positive electrode plate to the winding terminating end of the positive electrode plate. Therefore, along the width direction X of the positive electrode plate that is unwound, the distance between the first edge 320a of one layer of the negative active material layer 320, closest to the winding start end of the positive electrode plate 100, and the second edge 120a of one layer of the positive active material layer 120, closest to the winding start end of the positive electrode plate 100, is defined as S₁, and the distance between the first edge 320a of one layer of the negative active material layer 320, closest to the winding terminating end of the positive electrode plate 100, and the second edge 120a of one layer of the positive active material layer 120, closest to the winding terminating end of the positive electrode plate 100, is defined as S₀. The distances are controlled to satisfy: S₁ < S₀, thereby reducing the probability that the positive active material layer 120 near the winding terminating end of the positive electrode plate 100 extends beyond the negative active material layer 320. In this way, the metal ions of the positive active material layer 120 can be intercalated into the negative active material layer 320, thereby reducing the probability of precipitation of the metal ions, and improving the safety of the battery cell. In addition, the corresponding part of the electrode assembly 10 at which the negative active material layer 320 extends beyond the positive active material layer 120 forms an accommodation space. The accommodation space is available for accommodating an electrolyte solution, thereby increasing the accommodation space for an electrolyte solution, improving the infiltration effect of the electrolyte solution, and prolonging the service life of the battery cell.

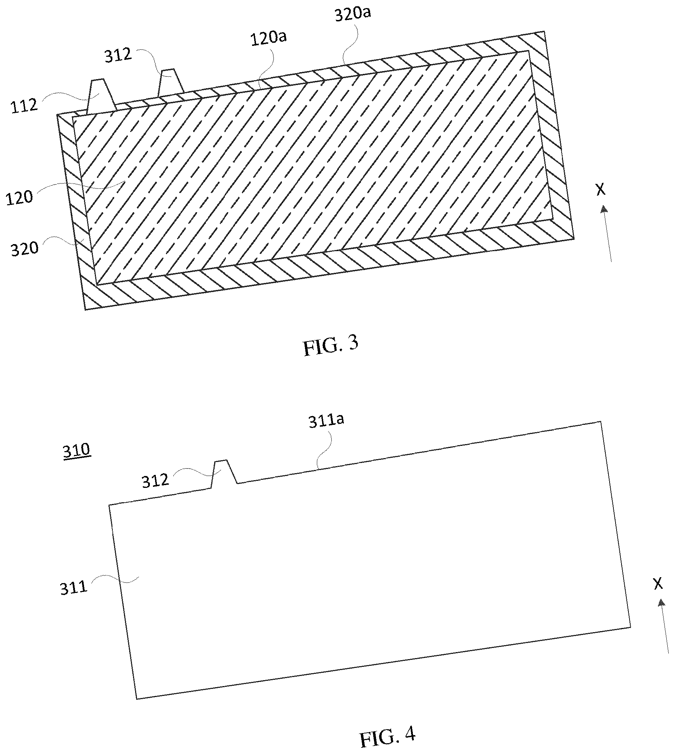

Referring to FIG. 3, FIG. 3 is a schematic structural diagram of an unwound electrode assembly of a battery cell according to other embodiments of this application.

In some embodiments, the distance between the first edge 320a of the negative active material layer 320 and the second edge 120a of the positive active material layer 120 gradually increases from the winding start end of the positive electrode plate 100 to the winding terminating end of the positive electrode plate 100.

By setting the distance between the first edge 320a of the negative active material layer 320 and the second edge 120a of the positive active material layer 120 to gradually increase from the winding start end of the positive electrode plate 100 to the winding terminating end of the positive electrode plate 100, this application further reduces the probability that the positive active material layer 120 extends beyond the negative active material layer 320. In this way, the metal ions of the positive active material layer 120 can be intercalated into the negative active material layer 320, thereby further reducing the probability of precipitation of the metal ions, and further improving the safety of the battery cell. In addition, the corresponding part of the electrode assembly 10 at which the negative active material layer 320 extends beyond the positive active material layer 120 forms an accommodation space. The accommodation space is available for accommodating the electrolyte solution, thereby further increasing the accommodation space for an electrolyte solution, further improving the infiltration effect of the electrolyte solution, and further prolonging the service life of the battery cell.

In some embodiments, from the winding start end of the positive electrode plate 100 to the winding terminating end of the positive electrode plate 100, along the width direction X of the positive electrode plate that is unwound, the width of the negative active material layer 320 gradually increases, and the width of the positive active material layer 120 remains unchanged.

By making the width of the negative active material layer 320 gradually increase and making the width of the positive active material layer 120 remain unchanged from the winding start end of the positive electrode plate 100 to the winding terminating end of the positive electrode plate 100 along the width direction X of the positive electrode plate that is unwound, this application causes the distance between the first edge 320a of the negative active material layer 320 and the second edge 120a of the positive active material layer 120 to gradually increase from the winding start end of the positive electrode plate 100 to the winding terminating end of the positive electrode plate 100, thereby reducing the probability that the positive active material layer 120 extends beyond the negative active material layer 320. In this way, the metal ions of the positive active material layer 120 can be intercalated into the negative active material layer 320, thereby reducing the probability of precipitation of the metal ions, and improving the safety of the battery cell. In addition, the corresponding part of the electrode assembly 10 at which the negative active material layer 320 extends beyond the positive active material layer 120 forms an accommodation space. The accommodation space is available for accommodating the electrolyte solution, thereby increasing the accommodation space for an electrolyte solution, improving the infiltration effect of the electrolyte solution, and prolonging the service life of the battery cell.

Referring to FIG. 3 and FIG. 4, FIG. 4 is a schematic structural diagram of an unwound negative current collector of a battery cell according to other embodiments of this application.

In some embodiments, the negative current collector 310 includes a negative electrode main portion 311 and a negative tab 312. The negative active material layer 320 is disposed on the negative electrode main portion 311. A part of the negative tab 312 is disposed on the negative electrode main portion, or, along the width direction X of the positive electrode plate that is unwound, the negative tab 312 is connected to a third edge 311a of the negative electrode main portion 311.

In some embodiments, a width of the negative electrode main portion 311 gradually increases from the winding start end of the negative electrode plate 300 to the winding terminating end of the positive electrode plate 100.

The negative active material layer 320 is disposed on the negative electrode main portion 311. Therefore, by setting the width of the negative electrode main portion 311 to gradually increase from the winding start end of the negative electrode plate 300 to the winding terminating end of the positive electrode plate 100, this application causes the width of the negative active material layer 320 to gradually increase from the winding start end of the positive electrode plate 100 to the winding terminating end of the positive electrode plate 100 along the width direction X of the positive electrode plate that is unwound.

In some embodiments, along the width direction X of the positive electrode plate that is unwound, the third edge 311a and the first edge 320a are located on the same side of the electrode assembly 10.

In other embodiments, along the width direction X of the positive electrode plate that is unwound, the third edge 311a and the first edge 320a are located on different sides of the electrode assembly 10.

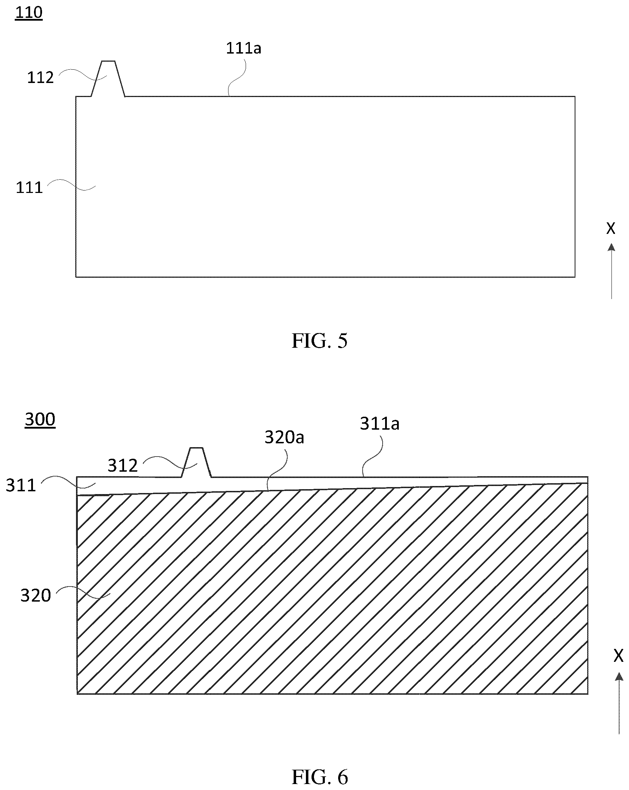

Referring to FIG. 3 and FIG. 5, FIG. 5 is a schematic structural diagram of an unwound positive current collector of a battery cell according to other embodiments of this application.

In some embodiments, the positive current collector 110 includes a positive electrode main portion 111 and a positive tab 112. The positive active material layer 120 is disposed on the positive electrode main portion 111. Along the width direction X of the positive electrode plate that is unwound, the positive tab 112 is connected to a fourth edge 111a of the positive electrode main portion 111.

In some embodiments, along the width direction X of the positive electrode plate that is unwound, the fourth edge 111a and the second edge 120a are located on the same side of the electrode assembly 10.

In other embodiments, along the width direction X of the positive electrode plate that is unwound, the fourth edge 111a and the second edge 120a are located on different sides of the electrode assembly 10.

Referring to FIG. 6, FIG. 6 is a schematic structural diagram of an unwound negative electrode plate of a battery cell according to other embodiments of this application.

In other embodiments, from the winding start end of the negative electrode plate 300 to the winding terminating end of the positive electrode plate 100, along the width direction X of the positive electrode plate that is unwound, the width of the negative active material layer 320 gradually increases, and the width of the negative electrode main portion 311 remains unchanged. This facilitates preparation of the negative current collector 310.

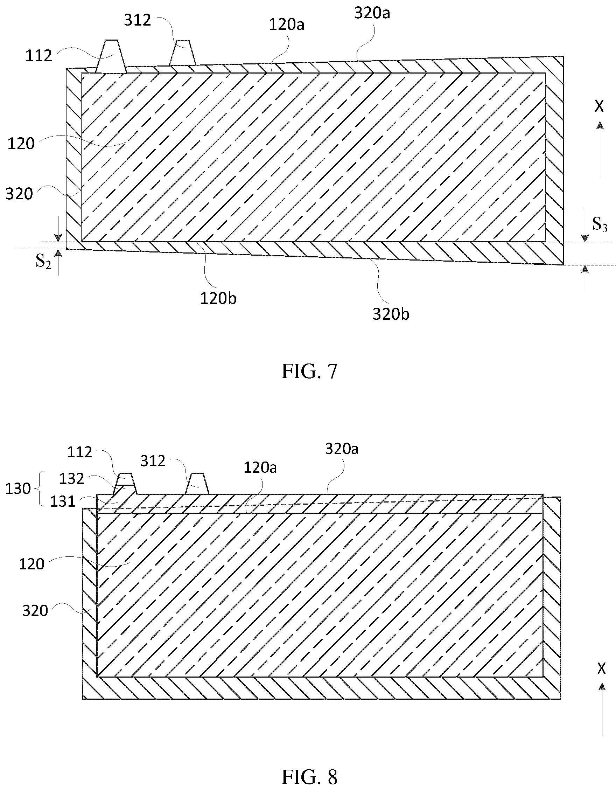

Referring to FIG. 7, FIG. 7 is a schematic structural diagram of an unwound electrode assembly of a battery cell according to other embodiments of this application.

In other embodiments, along the width direction X of the positive electrode plate that is unwound, the negative active material layer 320 includes a fifth edge 320b opposite to the first edge 320a, and the positive active material layer 120 includes a sixth edge 120b opposite to the second edge 120a. Along the width direction X of the positive electrode plate that is unwound, a distance between the fifth edge 320b of one layer of the negative active material layer 320, closest to the winding start end of the positive electrode plate 100, and the sixth edge 120b of one layer of the positive active material layer 120, closest to the winding start end of the positive electrode plate 100, is S₂, and a distance between the fifth edge 320b of one layer of the negative active material layer 320, closest to the winding terminating end of the positive electrode plate 100, and the sixth edge 120b of one layer of the positive active material layer 120, closest to the winding terminating end of the positive electrode plate 100, is S₃, satisfying: S₂ < S₃. For example, S₂ may be 0.9S₃, 0.7S₃, 0.5S₃, or the like.

This reduces the probability that the positive active material layer 120 near the winding terminating end of the positive electrode plate 100 extends beyond the negative active material layer 320. In this way, the metal ions of the positive active material layer 120 can be intercalated into the negative active material layer 320, thereby reducing the probability of precipitation of the metal ions, and improving the safety of the battery cell. In addition, the corresponding part of the electrode assembly 10 at which the negative active material layer 320 extends beyond the positive active material layer 120 forms an accommodation space. The accommodation space is available for accommodating an electrolyte solution, thereby increasing the accommodation space for an electrolyte solution, improving the infiltration effect of the electrolyte solution, and prolonging the service life of the battery cell.

Referring to FIG. 8, FIG. 8 is a schematic structural diagram of an unwound electrode assembly of a battery cell according to other embodiments of this application.

In some embodiments, the positive electrode plate 100 further includes an insulation coating 130. The insulation coating 130 includes a first part 131 and a second part 132. The first part 131 is disposed on the positive electrode main portion 111. The second part 132 is disposed on the positive tab 112.

The positive electrode plate 100 is set to further include an insulation coating 130, and the insulation coating 130 includes a first part 131 and a second part 132. The first part 131 is disposed on the positive electrode main portion 111, and the second part 132 is disposed on the positive tab 112. In this way, the first part 131 can implement insulation between the positive electrode main portion 111 and the negative tab 312 and the negative electrode main portion 311, and the second part 132 can implement insulation between the positive tab 112 and the negative tab 312, thereby improving the effect of insulation between the positive electrode plate 100 and the negative electrode plate 300, and improving the safety of the battery cell. In addition, the second part 132 can strengthen the supporting force for the positive tab 112. In this way, during transportation or winding of the positive electrode plate 100, the positive tab 112 is not prone to be folded by stress and rolled into the interior of the electrode assembly 10, thereby reducing the probability that burrs on the positive tab 112 pierce the separator 200 and cause a short circuit inside the battery cell, and also reducing the probability that lithium dendrites are formed inside the battery cell by the positive tab 112 and pierce the separator 200 and cause a short circuit.

In some embodiments, the insulation coating 130 may be a ceramic coating or an organic coating. The ceramic coating may be a coating made of aluminum oxide, magnesium oxide, titanium oxide, or the like, so that the insulation coating 130 produces a stronger insulation effect.

In some embodiments, the insulation coating 130 and the positive active material layer 120 are arranged along the width direction X of the positive electrode plate that is unwound.

By arranging the positive active material layer 120 and the insulation coating 130 along the width direction X of the positive electrode plate that is unwound, this application enables the first part 131 to cover the positive electrode main portion 111, and enables the second part 132 to cover a part of the positive tab 112, thereby reducing the probability of a short circuit between the positive electrode plate 100 and the negative electrode plate 300. In addition, without increasing the thickness of the positive electrode plate 100, the insulation coating 130 causes little impact on the energy density of the battery cell.

In some embodiments, from the winding start end of the positive electrode plate 100 to the winding terminating end of the positive electrode plate 100, along the width direction X of the positive electrode plate that is unwound, a width of an overlap part between the second part 132 and the negative electrode main portion 311 gradually increases.

Because the width of the negative electrode main portion 311 gradually increases from the winding start end of the positive electrode plate 100 to the winding terminating end of the positive electrode plate 100, by setting the width of the overlap part between the second part 132 and the negative electrode main portion 311 to gradually increase from the winding start end of the positive electrode plate 100 to the winding terminating end of the positive electrode plate 100 along the width direction X of the positive electrode plate that is unwound, this application improves the insulation effect of the second part 132 for the insulation between the positive electrode main portion 111 and the negative electrode main portion 311, reduces the probability of contact shorting between the positive electrode plate and the negative electrode plate, and further improves the safety of the battery cell.

In other embodiments, a part of the positive tab 112 may be disposed on the positive electrode main portion 111.

In some embodiments, the width of the first part 131 remains unchanged from the winding start end of the positive electrode plate 100 to the winding terminating end of the positive electrode plate 100.

By setting the width of the first part 131 to remain unchanged from the winding start end of the positive electrode plate 100 to the winding terminating end of the positive electrode plate 100, this application facilitates the preparation of an insulation coating 130, enables the insulation coating 130 to exert a good insulation effect between the positive electrode plate and the negative electrode plate, and improves the safety of the battery cell.

In some embodiments, a width by which the separator 200 extends beyond the negative electrode main portion 311 gradually decreases (not shown in the figure) from the winding start end of the positive electrode plate 100 to the winding terminating end of the positive electrode plate 100.

The width by which the separator 200 extends beyond the negative electrode main portion 311 is set to gradually decrease from the winding start end of the positive electrode plate 100 to the winding terminating end of the positive electrode plate 100, thereby enabling the separator 200 to exert a good isolation effect between the positive electrode plate and the negative electrode plate, and making the separator 200 occupy a smaller space. More accommodation space can be reserved for accommodating an electrolyte solution, thereby increasing the accommodation space for an electrolyte solution, improving the infiltration effect of the electrolyte solution, and prolonging the service life of the battery cell.

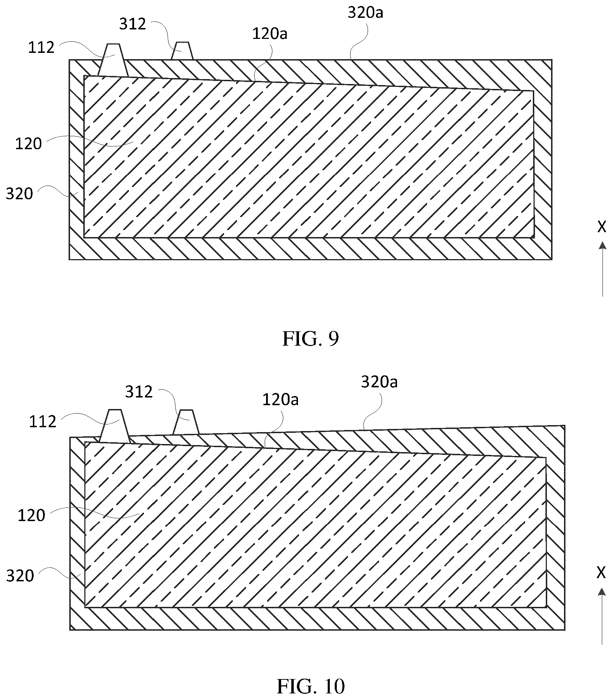

Referring to FIG. 9, FIG. 9 is a schematic structural diagram of an unwound electrode assembly of a battery cell according to other embodiments of this application.

In some embodiments, from the winding start end of the positive electrode plate 100 to the winding terminating end of the positive electrode plate 100, along the width direction X of the positive electrode plate that is unwound, the width of the negative active material layer 320 remains unchanged, and the width of the positive active material layer 120 gradually decreases.

By making the width of the negative active material layer 320 remain unchanged and making the width of the positive active material layer 120 gradually decrease from the winding start end of the positive electrode plate 100 to the winding terminating end of the positive electrode plate 100 along the width direction X of the positive electrode plate that is unwound, this application causes the distance between the first edge 320a of the negative active material layer 320 and the second edge 120a of the positive active material layer 120 to gradually increase from the winding start end of the positive electrode plate 100 to the winding terminating end of the positive electrode plate 100, thereby reducing the probability that the positive active material layer 120 extends beyond the negative active material layer 320. In this way, the metal ions of the positive active material layer 120 can be intercalated into the negative active material layer 320, thereby reducing the probability of precipitation of the metal ions, and improving the safety of the battery cell. In addition, the corresponding part of the electrode assembly 10 at which the negative active material layer 320 extends beyond the positive active material layer 120 forms an accommodation space. The accommodation space is available for accommodating the electrolyte solution, thereby increasing the accommodation space for an electrolyte solution, improving the infiltration effect of the electrolyte solution, and prolonging the service life of the battery cell.

In some embodiments, the separator 200 includes a seventh edge (not shown in the figure). The seventh edge and the first edge 320a of the negative active material layer 320 are located on the same side of the electrode assembly 10. The distance between the seventh edge and the first edge 320a remains unchanged from the winding start end of the positive electrode plate 100 to the winding terminating end of the positive electrode plate 100.

Referring to FIG. 10, FIG. 10 is a schematic structural diagram of an unwound electrode assembly of a battery cell according to other embodiments of this application.

In some embodiments, from the winding start end of the positive electrode plate 100 to the winding terminating end of the positive electrode plate 100, along the width direction X of the positive electrode plate that is unwound, the width of the negative active material layer 320 gradually increases, and the width of the positive active material layer 120 gradually decreases.

By making the width of the negative active material layer 320 gradually increase and making the width of the positive active material layer 120 gradually decrease from the winding start end of the positive electrode plate 100 to the winding terminating end of the positive electrode plate 100 along the width direction X of the positive electrode plate that is unwound, this application causes the distance between the first edge 320a of the negative active material layer 320 and the second edge 120a of the positive active material layer 120 to gradually increase from the winding start end of the positive electrode plate 100 to the winding terminating end of the positive electrode plate 100, thereby reducing the probability that the positive active material layer 120 extends beyond the negative active material layer 320. In this way, the metal ions of the positive active material layer 120 can be intercalated into the negative active material layer 320, thereby reducing the probability of precipitation of the metal ions, and improving the safety of the battery cell. In addition, the corresponding part of the electrode assembly 10 at which the negative active material layer 320 extends beyond the positive active material layer 120 forms an accommodation space. The accommodation space is available for accommodating the electrolyte solution, thereby increasing the accommodation space for an electrolyte solution, improving the infiltration effect of the electrolyte solution, and prolonging the service life of the battery cell.

In some embodiments, the separator 200 includes a seventh edge (not shown in the figure). The seventh edge and the first edge 320a of the negative active material layer 320 are located on the same side of the electrode assembly 10. The distance between the seventh edge and the first edge 320a gradually decreases from the winding start end of the positive electrode plate 100 to the winding terminating end of the positive electrode plate 100.

In some embodiments, 0 < S₀ - S₁ ≤ 5 mm. For example, S₀-S₁ may be 1 mm, 3 mm, 5 mm, or the like.

The setting of S₀-S₁ > 0 reduces the probability that the positive active material layer 120 near the winding terminating end of the positive electrode plate 100 extends beyond the negative active material layer 320. In this way, the metal ions of the positive active material layer 120 can be intercalated into the negative active material layer 320, thereby reducing the probability of precipitation of the metal ions, and improving the safety of the battery cell. In addition, the corresponding part of the electrode assembly 10 at which the negative active material layer 320 extends beyond the positive active material layer 120 forms an accommodation space. The accommodation space is available for accommodating an electrolyte solution, thereby increasing the accommodation space for an electrolyte solution, improving the infiltration effect of the electrolyte solution, and prolonging the service life of the battery cell. The setting of S₀-S₁ ≤ 5 mm reduces the proportion of a non-overlap area between the negative active material layer 320 and the positive active material layer 120 along the thickness direction of the positive electrode plate 100, and increases a proportion of an overlap area between the negative active material layer 320 and the positive active material layer 120. An effective area available on the negative active material layer 320 for intercalation of metal ions accounts for a larger proportion, thereby increasing the energy density of the battery cell. Therefore, the setting of 0 < S₀ - S₁ ≤ 5 mm not only reduces the probability of precipitation of metal ions, improves the safety of the battery cell, improves the infiltration effect of the electrolyte solution, and prolongs the service life of the battery cell, but also increases the proportion of the effective area available on the negative active material layer 320 for intercalation of the metal ions, and increases the energy density of the battery cell.

In some embodiments, 1.5 mm ≤ S₀ ≤ 5 mm. For example, S₀ may be 1.5 mm, 3 mm, 5 mm, or the like.

The setting of S₀ ≥ 1.5 mm increases the distance by which the first edge 320a of the n^{th} layer of the negative active material layer 320 closest to the winding terminating end of the positive electrode plate 100 extends beyond the second edge 120a of the n^{th} layer of the positive active material layer 120 closest to the winding terminating end of the positive electrode plate 100. After the electrode assembly 10 is formed by winding, the probability that the positive active material layer 120 near the winding terminating end of the positive electrode plate 100 extends beyond the negative active material layer 320 is relatively low. In this way, the metal ions of the positive active material layer 120 can be intercalated into the negative active material layer 320, thereby reducing the probability of precipitation of the metal ions, and improving the safety of the battery cell. In addition, the corresponding part of the electrode assembly 10 at which the n^{th} layer of the negative active material layer 320 extends beyond the n^{th} layer of the positive active material layer 120 forms a larger accommodation space, thereby increasing the accommodation space for an electrolyte solution, improving the infiltration effect of the electrolyte solution, and prolonging the service life of the battery cell. The setting of S₀ ≤ 5 mm reduces the proportion of the non-overlap area between the n^{th} layer of the negative active material layer 320 and the n^{th} layer of the positive active material layer 120 along the thickness direction of the positive electrode plate 100, and increases the proportion of the overlap area between the n^{th} layer of the negative active material layer 320 and the n^{th} layer of the positive active material layer 120. The effective area available on the n^{th} layer of the negative active material layer 320 for intercalation of metal ions accounts for a larger proportion, thereby increasing the energy density of the battery cell. Therefore, the setting of 1.5 mm ≤ S₀ ≤ 5 mm not only reduces the probability that the positive active material layer 120 close to the winding terminating end of the positive electrode plate 100 extends beyond the negative active material layer 320, reduces the probability of precipitation of metal ions, and improves the safety of the battery cell, but also increases the proportion of the effective area available on the n^{th} layer of the negative active material layer 320 for intercalation of metal ions, and increases the energy density of the battery cell.

In some embodiments, 0.5 mm ≤ S₁ ≤ 2.5 mm. For example, S₁ may be 0.5 mm, 1.5 mm, 2.5 mm, or the like.

The setting of S₁ ≥ 0.5 mm increases the distance by which the first edge 320a of the 1^{st} layer of the negative active material layer 320 closest to the winding terminating end of the positive electrode plate 100 extends beyond the second edge 120a of the 1^{st} layer of the positive active material layer 120 closest to the winding terminating end of the positive electrode plate 100. After the electrode assembly 10 is formed by winding, the probability that the positive active material layer 120 near the winding terminating end of the positive electrode plate 100 extends beyond the negative active material layer 320 is relatively low. In this way, the metal ions of the positive active material layer 120 can be intercalated into the negative active material layer 320, thereby reducing the probability of precipitation of the metal ions, and improving the safety of the battery cell. In addition, the corresponding part of the electrode assembly 10 at which the 1^{st} layer of the negative active material layer 320 extends beyond the 1^{st} layer of the positive active material layer 120 forms a larger accommodation space, thereby increasing the accommodation space for an electrolyte solution, improving the infiltration effect of the electrolyte solution, and prolonging the service life of the battery cell. The setting of S₁ ≤ 2.5 mm reduces the proportion of the non-overlap area between the n^{th} layer of the negative active material layer 320 and the 1^{st} layer of the positive active material layer 120 along the thickness direction of the positive electrode plate 100, and increases the proportion of the overlap area between the 1^{st} layer of the negative active material layer 320 and the 1^{st} layer of the positive active material layer 120. The effective area available on the 1^{st} layer of the negative active material layer 320 for intercalation of metal ions accounts for a larger proportion, thereby increasing the energy density of the battery cell. Therefore, the setting of 0.5 mm ≤ S₁ ≤ 2.5 mm not only reduces the probability that the positive active material layer 120 close to the winding terminating end of the positive electrode plate 100 extends beyond the negative active material layer 320, reduces the probability of precipitation of metal ions, and improves the safety of the battery cell, but also increases the proportion of the effective area available on the n^{th} layer of the negative active material layer 320 for intercalation of metal ions, and increases the energy density of the battery cell.

In some embodiments, from the winding start end of the positive electrode plate 100 to the winding terminating end of the positive electrode plate 100, a distance between the first edge 320a of an (n-1)^{th} layer of the negative active material layer 320 and the second edge 120a of an (n-1)^{th} layer of the positive active material layer 120 is Sₙ₋₁, and a distance between the first edge 320a of an n^{th} layer of the negative active material layer 320 and the second edge 120a of an n^{th} layer of the positive active material layer 120 is Sₙ, satisfying: 0 < Sₙ - Sₙ₋₁ ≤ 1 mm, where n is an integer greater than or equal to 3. For example, Sₙ-Sₙ₋₁ may be 0.2 mm, 0.8 mm, 1 mm, or the like.

The setting of Sₙ-Sₙ₋₁ > 0 reduces the probability that the positive active material layer 120 extends beyond the negative active material layer 320. In this way, the metal ions of the positive active material layer 120 can be intercalated into the negative active material layer 320, thereby reducing the probability of precipitation of the metal ions, and improving the safety of the battery cell. In addition, the corresponding part of the electrode assembly 10 at which the negative active material layer 320 extends beyond the positive active material layer 120 forms an accommodation space. The accommodation space is available for accommodating the electrolyte solution, thereby increasing the accommodation space for an electrolyte solution, improving the infiltration effect of the electrolyte solution, and prolonging the service life of the battery cell. The setting of Sₙ-Sₙ₋₁ ≤ 1 mm reduces the proportion of a non-overlap area between the negative active material layer 320 and the positive active material layer 120 along the thickness direction of the positive electrode plate 100, and increases a proportion of an overlap area between the negative active material layer 320 and the positive active material layer 120. An effective area available on the negative active material layer 320 for intercalation of metal ions accounts for a larger proportion, thereby increasing the energy density of the battery cell. Therefore, the setting of 0 < Sₙ-Sₙ₋₁ ≤ 1 mm not only reduces the probability of precipitation of metal ions, improves the safety of the battery cell, improves the infiltration effect of the electrolyte solution, and prolongs the service life of the battery cell, but also increases the proportion of the effective area available on the negative active material layer 320 for intercalation of metal ions, and increases the energy density of the battery cell.

In some embodiments, from the winding start end of the positive electrode plate 100 to the winding terminating end of the positive electrode plate 100, a distance between the first edge 320a of an (n-2)^{th} layer of the negative active material layer 320 and the second edge 120a of an (n-2)^{th} layer of the positive active material layer 120 is Sₙ₋₂, satisfying: Sₙ - Sₙ₋₁ = Sₙ₋₁ - Sₙ₋₂.

The setting of Sₙ - Sₙ₋₁ = Sₙ₋₁ - Sₙ₋₂ makes the distance between the first edge 320a of the negative active material layer 320 and the second edge 120a of the positive active material layer 120 vary evenly. When the setting is applied to a winding process of the electrode assembly 10, the tolerance variation in the widths of the positive electrode plate and the negative electrode plate gradually increases from the winding start end of the positive electrode plate to the winding terminating end of the positive electrode plate, thereby reducing the probability that the positive active material layer 120 extends beyond the negative active material layer 320. In this way, the metal ions of the positive active material layer 120 can be intercalated into the negative active material layer 320, thereby reducing the probability of precipitation of the metal ions, and improving the safety of the battery cell.

The battery cell further includes a housing (not shown in the figure). The housing is configured to accommodate the electrode assembly 10 and the electrolyte solution. The battery cell works primarily by shuttling metal ions between the positive electrode plate and the negative electrode plate. Using a lithium-ion battery as an example, the positive current collector may be made of aluminum, and a positive active material may be lithium cobalt oxide, lithium iron phosphate, a ternary material, lithium manganese oxide, or the like. The negative current collector may be made of copper, and the negative active material may be a carbon material, a silicon material, or the like. The separator may be made of polypropylene (PP), polyethylene (PE), or another material. The electrolyte solution may include an organic solvent, an electrolyte lithium salt, and the like.

An embodiment of this application provides an electrical device. The electrical device includes the battery cell provided in any one of the above embodiments. The battery cell is configured to provide electrical energy.

The electrical device may be any one of the above devices or systems in which the battery cell is applied.

It is hereby noted that to the extent that no conflict occurs, the embodiments of this application and the features in the embodiments may be combined with each other.

What is described above is merely exemplary embodiments of this application, but is not intended to limit this application. To a person skilled in the art, various modifications and variations may be made to this application. Any and all modifications, equivalent replacements, improvements, and the like made without departing from the essence and principles of this application still fall within the protection scope of this application.

## Claims

1. A battery cell, comprising an electrode assembly (10); wherein the electrode assembly (10) comprises a positive electrode plate (100), a separator (200), and a negative electrode plate (300); the positive electrode plate (100), the separator (200), and the negative electrode plate (300) are stacked together and wound to form the electrode assembly (10);
the negative electrode plate (300) comprises a negative current collector (310) and a negative active material layer (320) disposed on a surface of the negative current collector (310), and along a width direction (X) of the positive electrode plate (100), the negative active material layer (320) comprises a first edge (320a); and
the positive electrode plate (100) comprises a positive current collector (110) and a positive active material layer (120) disposed on a surface of the positive current collector (110), and along the width direction (X) of the positive electrode plate (100), a width of the negative active material layer (320) is greater than a width of the positive active material layer (120); the positive active material layer (120) comprises a second edge (120a), and the first edge (320a) and the second edge (120a) are located on a same side of the electrode assembly (10);
**characterized in that**, along the width direction (X) of the positive electrode plate (100), a distance between the first edge (320a) of one layer of the negative active material layer (320) closest to a winding start end of the positive electrode plate (100), and the second edge (120a) of one layer of the positive active material layer (120) closest to the winding start end of the positive electrode plate (100), is S₁, and a distance between the first edge (320a) of one layer of the negative active material layer (320) closest to a winding terminating end of the positive electrode plate (100), and the second edge (120a) of one layer of the positive active material layer (120) closest to the winding terminating end of the positive electrode plate (100), is S₀, S₁ < S₀.

2. The battery cell according to claim 1, **characterized in that** a distance between the first edge (320a) and the second edge (120a) gradually increases from the winding start end of the positive electrode plate (100) to the winding terminating end of the positive electrode plate (100).

3. The battery cell according to claim 1 or 2, **characterized in that**, along the width direction (X) of the positive electrode plate (100) , the width of the negative active material layer (320) gradually increases from the winding start end of the positive electrode plate (100) to the winding terminating end of the positive electrode plate (100); and
along the width direction (X) of the positive electrode plate (100), the width of the positive active material layer (120) remains unchanged from the winding start end of the positive electrode plate (100) to the winding terminating end of the positive electrode plate (100).

4. The battery cell according to claim 3, **characterized in that** the negative current collector (310) comprises a negative electrode main portion (311) and a negative tab (312), the negative active material layer (320) is disposed on the negative electrode main portion (311); a part of the negative tab (312) is disposed on the negative electrode main portion (311), or, along the width direction (X) of the positive electrode plate (100), the negative tab (312) is connected to a third edge (311a) of the negative electrode main portion (311); and
from the winding start end of the positive electrode plate (100) to the winding terminating end of the positive electrode plate (100), a width of the negative electrode main portion (311) gradually increases.

5. The battery cell according to claim 4, **characterized in that** the positive current collector (110) comprises a positive electrode main portion (111) and a positive tab (112), the positive active material layer (120) is disposed on the positive electrode main portion (111); a part of the positive tab (112) is disposed on the positive electrode main portion (111), or, along the width direction (X) of the positive electrode plate (100), the positive tab (112) is connected to a fourth edge (111a) of the positive electrode main portion (111);
the positive electrode plate (100) further comprises an insulation coating (130), the insulation coating (130) comprises a first part (131) and a second part (132), the first part (131) is disposed on the positive electrode main portion (111), and the second part (132) is disposed on the positive tab (112); and
from the winding start end of the positive electrode plate (100) to the winding terminating end of the positive electrode plate (100), along the width direction (X) of the positive electrode plate (100), a width of an overlap part between the first part (131) and the negative electrode main portion (311) gradually increases.

6. The battery cell according to claim 5, **characterized in that** a width of the first part (131) remains unchanged from the winding start end of the positive electrode plate (100) to the winding terminating end of the positive electrode plate (100).

7. The battery cell according to claim 4, **characterized in that** a width by which the separator (200) extends beyond the negative electrode main portion (311) gradually decreases from the winding start end of the positive electrode plate (100) to the winding terminating end of the positive electrode plate (100).

8. The battery cell according to claim 1 or 2, **characterized in that**, from the winding start end of the positive electrode plate (100) to the winding terminating end of the positive electrode plate (100), along the width direction (X) of the positive electrode plate (100), the width of the negative active material layer (320) remains unchanged, and the width of the positive active material layer (120) gradually decreases.

9. The battery cell according to claim 1 or 2, **characterized in that**, from the winding start end of the positive electrode plate (100) to the winding terminating end of the positive electrode plate (100), along the width direction (X) of the positive electrode plate (100), the width of the negative active material layer (320) gradually increases, and the width of the positive active material layer (120) gradually decreases.

10. The battery cell according to any one of claims 1 to 9, **characterized in that** 0 < S₀ - S₁ ≤ 5 mm.

11. The battery cell according to claim 10, **characterized in that** 1.5 mm ≤ S₀ ≤ 5 mm, and 0.5 mm ≤ S₁ ≤ 2.5 mm.

12. The battery cell according to claim 10, **characterized in that**, from the winding start end of the positive electrode plate (100) to the winding terminating end of the positive electrode plate (100), a distance between the first edge (320a) of an (n-1)^{th} layer of the negative active material layer (320) and the second edge (120a) of an (n-1)^{th} layer of the positive active material layer (120) is Sₙ₋₁, and a distance between the first edge (320a) of an n^{th} layer of the negative active material layer (320) and the second edge (120a) of an n^{th} layer of the positive active material layer (120) is Sₙ, satisfying: 0 < Sₙ - Sₙ₋₁ ≤ 1 mm, wherein n is an integer greater than or equal to 3.

13. The battery cell according to claim 12, **characterized in that**, from the winding start end of the positive electrode plate (100) to the winding terminating end of the positive electrode plate (100), a distance between the first edge (320a) of an (n-2)^{th} layer of the negative active material layer (320) and the second edge (120a) of an (n-2)^{th} layer of the positive active material layer (120) is Sₙ₋₂, satisfying: Sₙ - Sₙ₋₁ = Sₙ₋₁ - Sₙ₋₂.

14. An electrical device, **characterized in that** the electrical device comprises the battery cell according to any one of claims 1 to 13, and the battery cell is configured to provide electrical energy.
